# EUROPÄISCHE PATENTSCHRIFT

(11) **EP 3 658 339 B1**
(45) Veröffentlichungstag und Bekanntmachung des Hinweises auf die Patenterteilung: **09.11.2022**
(21) Anmeldenummer: 18740200.3
(22) Anmeldetag: 11.07.2018
(51) Int. Cl.: B65D 1/22, B65D 25/06, B25H 3/02, B25H 3/04, B65D 43/02

(54) **AUFBEWAHRUNGSKASTEN UND REGAL**
STORAGE BOX AND SHELF
BOÎTE DE RANGEMENT ET ÉTAGÈRE

(30) Priorität: 28.07.2017 DE 102017213037
(43) Veröffentlichungstag der Anmeldung: 03.06.2020
(73) Patentinhaber: Adolf Würth GmbH & Co. KG, 74653 Künzelsau (DE); Würth International AG, 7000 Chur (CH)
(72) Erfinder: HOHL, Wolfgang, 74653 Künzelsau (DE); STARKE, Johannes, 74248 Ellhofen (DE)
(74) Vertreter: Patentanwälte Ruff, Wilhelm, Beier, Dauster & Partner mbB
(86) Internationale Anmeldenummer: PCT/EP2018/068832
(87) Internationale Veröffentlichungsnummer: WO 2019/020380

(56) Entgegenhaltungen:
- WO-A1-2011/135559
- DE-A1-102014 225 512
- DE-U1-202014 101 910

## Beschreibung

Die Erfindung betrifft ein Regal mit wenigstens einem Aufbewahrungskasten für Kleinteile, insbesondere Schrauben, mit einem Boden und wenigstens zwei Seitenwänden, die vom Boden ausgehen und oberhalb des Bodens in Längsrichtung angeordnet sind, wobei eine erste und eine zweite Seitenwand in Querrichtung des Aufbewahrungskastens einander gegenüber angeordnet sind und wobei parallel zu der ersten und zweiten Seitenwand in Längsrichtung des Aufbewahrungskastens gesehen der Boden eine Mitte sowie eine vordere und eine hintere Hälfte aufweist.

Die DE 20 2014 101910 U1 offenbart einen Behälter für Kleinteile. Der Behälter ist derart ausgelegt, dass eine Schiebescheibe im Behälter angeordnet werden kann und sowohl zum Verschließen einer Entnahmeöffnung des Behälters als auch als Dosierscheibe eingesetzt werden kann.

Die DE 10 2014 225512 A1 offenbart einen Koffer zum Aufnehmen von Werkzeugen oder Kleinteilen mit einem schwenkbaren Deckel.

Mit der Erfindung soll ein Regal hinsichtlich einer erleichterten Entnahme von Gegenständen aus dem Aufbewahrungskasten verbessert werden.

Erfindungsgemäß ist hierzu ein Regal mit wenigstens einem Aufbewahrungskasten für Kleinteile, insbesondere Schrauben, mit einem Boden und wenigstens zwei Seitenwänden vorgesehen, die vom Boden ausgehen und oberhalb des Bodens in Längsrichtung angeordnet sind, wobei eine erste und eine zweite Seitenwand in Querrichtung des Aufbewahrungskastens einander gegenüber angeordnet sind und wobei parallel zu der ersten und zweiten Seitenwand in Längsrichtung des Aufbewahrungskastens gesehen der Boden eine Mitte sowie eine vordere und eine hintere Hälfte aufweist, bei dem der Boden und/oder sich in Verlängerung der ersten bzw. der zweiten Seitenwand unterhalb des Bodens erstreckende Sockelwände eine erste Nut und/oder Anschläge zum Ausbilden einer ersten nutartigen Aufnahme definieren, die senkrecht zu der ersten Seitenwand und der zweiten Seitenwand und im Bereich der Mitte oder der hinteren Hälfte des Bodens verläuft.

Das Vorsehen einer in Querrichtung des Kastens angeordneten Nut oder einer nutartigen Aufnahme, wobei die Nut oder die nutartige Aufnahme im Bereich der Mitte oder der hinteren Hälfte des Bodens verläuft und für das Eingreifen geeigneter Mittel eines Regals vorgesehen ist, erlaubt das kontrollierte Verkippen des Kastens, beispielsweise in einem Regal, um dadurch den Innenraum des Kastens für einen Bediener leichter zugänglich zu machen und dadurch das Entnehmen von Gegenständen aus dem Aufbewahrungskasten zu erleichtern. Das Vorsehen einer Nut oder einer nutartigen Aufnahme erlaubt dabei ein definiertes und kontrolliertes Verkippen. Speziell kann durch das Vorsehen der Nut oder der nutartigen Aufnahme sichergestellt werden, dass der Aufbewahrungskasten lediglich verkippt wird und nicht versehentlich nach vorne aus einem Regal herausrutscht.

In Weiterbildung der Erfindung weist die erste Seitenwand eine sich in Verlängerung der ersten Seitenwand unterhalb des Bodens erstreckende erste Sockelwand und die zweite Seitenwand eine sich in Verlängerung der zweiten Seitenwand unterhalb des Bodens erstreckende zweite Sockelwand auf, wobei die erste und die zweite Sockelwand jeweils mit einer Ausnehmung zum Definieren der ersten Nut versehen sind, wobei eine Wand der jeweiligen Ausnehmung, die der vorderen Hälfte des Bodens zugewandt ist, schräg vom Boden und der hinteren Hälfte des Bodens weg verläuft.

Durch eine solche schräge Ausgestaltung der vorderen Wand der Nut kann die Box zum einen leicht verkippt werden, wenn ein Vorsprung oder ein Querträger in die Ausnehmung eingreift. Darüber hinaus kann der Aufbewahrungskasten in einfacher Weise wieder in das Regal hineingeschoben werden, da die schräge Vorderwand der Ausnehmung als Anlaufschräge wirkt, wenn der Kasten in das Regal zurückgedrückt wird.

In Weiterbildung der Erfindung weist der Boden eine in Längsrichtung des Aufbewahrungskastens verlaufende zweite Nut oder Anschläge zur Ausbildung einer in Längsrichtung des Aufbewahrungskastens verlaufenden zweiten nutartigen Aufnahme auf.

Eine solche zweite Nut oder zweite nutartige Aufnahme kann zum einen für die Anordnung eines Haltebands verwendet werden, mit der beispielsweise ein Deckel oder eine sonstige Abdeckung des Aufbewahrungskastens während des Transports festgehalten wird. Darüber hinaus kann eine solche zweite Nut oder zweite nutartige Aufnahme für eine Längsführung der Aufbewahrungskastens beim Ausziehen und Einschieben in ein Regal vorgesehen sein. Eine Längsführung erfolgt dann zusammenwirkend mit einem Vorsprung an einem Fachboden eines Regals.

In Weiterbildung der Erfindung ist ein Deckel für den Aufbewahrungskasten vorgesehen, wobei der Deckel mit einer in Längsrichtung des Aufbewahrungskastens verlaufenden dritten Nut oder Anschlägen zur Ausbildung einer in Längsrichtung des Aufbewahrungskastens verlaufenden dritten nutartigen Aufnahme versehen ist.

Eine solche dritte Nut oder dritte nutartige Aufnahme dient zur definierten Anordnung eines Haltebands, das den Aufbewahrungskastens einschließlich Deckel umschlingt und während des Transports, beispielsweise während des Versands, den Deckel sicher auf dem Aufbewahrungskasten hält. Das Vorsehen einer dritten Nut oder einer dritten nutartigen Aufnahme schafft dabei eine definierte Aufnahme für das Halteband, so dass dieses Halteband zum einen beim Stapeln mehrerer Aufbewahrungskästen nicht stört und zum anderen auch nicht verrutschen kann. Bevorzugt ist das Halteband unterhalb einer Oberkante des Aufbewahrungskastens und oberhalb einer Unterkante des Aufbewahrungskastens angeordnet, so dass mehrere Aufbewahrungskästen auch dann gestapelt werden können, wenn sie jeweils mit einem Halteband umreift sind.

In Weiterbildung der Erfindung ist ein Deckel für den Aufbewahrungskasten vorgesehen, wobei der Deckel im geschlossenen Zustand unterhalb einer durch die Oberkanten der Seitenwände definierten gedachten Ebene angeordnet ist und wobei der Deckel wenigstens einen sich in Richtung auf die gedachte Ebene erstreckenden Griffvorsprung aufweist.

Indem der Deckel im geschlossenen Zustand unterhalb einer durch die Oberkanten der Seitenwände definierten gedachten Ebene angeordnet ist, können auch mehrere mit einem Deckel verschlossene Aufbewahrungskästen problemlos aufeinandergestapelt werden. Auch dann, wenn beispielsweise eine Platte auf einen Aufbewahrungskastens gelegt wird, wird die durch eine Platte übertragene Kraft nicht auf den Deckel, sondern auf die Oberkanten der Seitenwände übertragen. Das Vorsehen eines Griffs erleichtert die Handhabung des Deckels.

In Weiterbildung der Erfindung weist der Griffvorsprung des Deckels eine sich in Längsrichtung erstreckende dritte Nut auf, die zusammen mit der zweiten Nut am Boden eine Anlagefläche für einen den Aufbewahrungskasten umschlingendes Halteband bilden.

Auf diese Weise ist zum einen das Halteband sicher fixiert. Zum anderen können durch die versenkte Anordnung des Haltebandes auch mehrere Aufbewahrungskästen gestapelt werden, die jeweils von einem Halteband umschlungen sind.

In Weiterbildung der Erfindung definieren der Boden und/oder sich in Verlängerung der ersten bzw. der zweiten Seitenwand unterhalb des Bodens erstreckende Sockelwände eine vierte Nut und/oder Anschläge zum Ausbilden einer vierten nutartigen Aufnahme, die senkrecht zu der ersten Seitenwand und der zweiten Seitenwand verläuft, im Bereich der Mitte oder der hinteren Hälfte des Bodens verläuft und von der ersten Nut und/oder der ersten nutartigen Aufnahme beabstandet ist.

Eine solche vierte Nut oder vierte nutartige Aufnahme, die von der ersten Nut oder der ersten nutartigen Aufnahme beabstandet ist, erlaubt eine zweite kontrollierte Kippstellung des Kastens, beispielsweise in einem Regal. Je nachdem, wie weit der Aufbewahrungskasten aus dem Regal ausgezogen wird, kann eine erste oder eine zweite definierte Kippstellung des Aufbewahrungskasten im Regal erzielt werden, abhängig davon, ob der Aufbewahrungskasten um die erste Nut oder erste nutartige Aufnahme oder die vierte Nut oder vierte nutartige Aufnahme verkippt wird. Die erste Nut, die erste nutartige Aufnahme, die vierte Nut oder die vierte nutartige Aufnahme stellen dabei sicher, dass der Aufbewahrungskasten lediglich verkippt wird und nicht versehentlich nach vorne aus einem Regal herausrutscht.

Das Regal weist Mittel zum Eingreifen in die erste Nut oder die erste nutartige Aufnahme des Aufbewahrungskastens und wenigstens einen Anschlag für den Aufbewahrungskasten oberhalb der Mittel zum Eingreifen auf, so dass der Aufbewahrungskasten dann, wenn die Mittel zum Eingreifen in die erste Nut oder in die erste nutartige Aufnahme eingreifen und der Aufbewahrungskasten an dem Anschlag anliegt, der Aufbewahrungskasten eine teilweise aus dem Regal ausgezogene und gekippte Stellung einnimmt.

Auf diese Weise kann zum einen eine Zusammenwirkung des Regals, beispielsweise eines Vorsprungs am Fachboden, und der Nut oder der nutartigen Aufnahme am Kasten und zum anderen ein Zusammenwirken des Aufbewahrungskastens mit den Anschlag erreicht werden, so dass dann ein sicheres, definiertes und stabiles Verkippen des Aufbewahrungskastens nach vorne und dadurch eine bessere Zugänglichkeit des Innenraums des Aufbewahrungskastens erzielt werden kann. Ein Fachboden kann dabei durch Schienen oder auch durch eine Platte definiert sein, der Fachboden muss aber nicht notwendigerweise als geschlossener Boden ausgebildet sein. Der Anschlag verhindert dabei, dass der Aufbewahrungskasten aus dem Regal kippt. Der Anschlag ist so ausgebildet und angeordnet, dass der Aufbewahrungskasten eine stabile verkippte und teilweise aus dem Regal ausgezogenen Stellung einnehmen kann. Der Aufbewahrungskasten ist dann stabil durch das Regal gehalten, so dass ein Bediener auch nur mit einer Hand Kleinteile entnehmen kann.

In Weiterbildung der Erfindung sind die Mittel zum Eingreifen in die erste Nut oder die erste nutartige Aufnahme auch zum Eingreifen in eine vierte und/oder vierte nutartige Aufnahme geeignet, wobei der Boden und/oder sich in Verlängerung der ersten bzw. der zweiten Seitenwand unterhalb des Bodens erstreckende Sockelwände die vierte Nut und/oder Anschläge zum Ausbilden der vierten nutartige Aufnahme definieren, so dass der Aufbewahrungskasten dann, wenn die Mittel zum Eingreifen in die vierte Nut oder in die vierte nutartige Aufnahme eingreifen und der Aufbewahrungskasten an dem Anschlag anliegt, der Aufbewahrungskasten eine zweite, teilweise aus dem Regal ausgezogene, gekippte und stabile Stellung einnimmt.

Mit dem erfindungsgemäßen Regal kann der Aufbewahrungskasten dadurch in zwei unterschiedlich weit ausgezogene und unterschiedlich stark verkippte Stellungen gebracht werden. Beide teilweise ausgezogene und gekippten Stellungen sind dabei stabile Stellungen, so dass ein Bediener auch nur mit einer Hand Gegenstände oder Kleinteile aus dem Aufbewahrungskasten entnehmen kann.

In Weiterbildung der Erfindung sind die Mittel zum Eingreifen und der wenigstens eine Anschlag oberhalb der Mittel zum Eingreifen so ausgebildet und angeordnet, dass die erste Nut oder die erste nutartige Aufnahme am Aufbewahrungskasten mittels Anheben des Aufbewahrungskastens wenigstens in seinem vorderen Bereich außer Eingriff mit den Mitteln zum Eingreifen gebracht werden kann und der Aufbewahrungskasten aus dem Regal entnommen werden kann.

Durch einfaches Anheben des Aufbewahrungskastens können die Mittel zum Eingreifen und die erste Nut oder die erste nutartige Aufnahme außer Eingriff gebracht werden und der Aufbewahrungskasten kann dann entweder vollständig aus dem Regal entnommen oder wieder vollständig zurück ins Regal geschoben werden.

In Weiterbildung der Erfindung weist das Regal wenigstens einen Fachboden auf und die Mittel zum Eingreifen weisen an der Vorderkante des Fachbodens wenigstens einen vom Fachboden aus nach oben abragenden Vorsprung oder wenigstens eine sich nach unten erstreckende Ausnehmung im Fachboden auf.

Auf diese Weise kann der Fachboden selbst die Mittel zum Eingreifen aufweisen. Ein nach oben abragender Vorsprung kann beispielsweise durch eine einfache Aufkantung am vorderen Ende des Fachbodens realisiert sein, der dann gleichzeitig zu einer Versteifung des Fachbodens beiträgt.

In Weiterbildung der Erfindung erstreckt sich der nach oben abragende Vorsprung über die gesamte Breite des Fachbodens.

Ein solcher Vorsprung kann auch als Sicherung gegen Herausrutschen der Aufbewahrungskästen aus dem Fachboden dienen. Zum Herausziehen der Aufbewahrungskästen müssen diese vorne angehoben werden. Bevor der Aufbewahrungskasten vollständig aus dem Regal herausgezogen wird, rutscht der Aufbewahrungskasten mit der ersten Nut oder der ersten nutartigen Aufnahme auf den Vorsprung. Dadurch wird eine Sicherung gegen unbeabsichtigtes Herausziehen bereitgestellt. Der Aufbewahrungskasten kann erst dann vollständig aus dem Regal herausgezogen werden, wenn er erneut vorne angehoben wird, so dass die erste Nut oder die erste nutartige Aufnahme außer Eingriff mit dem Vorsprung gebracht wird.

In Weiterbildung der Erfindung ist der Anschlag als eine Querstrebe oberhalb des Fachbodens ausgebildet.

Mittels einer Querstrebe lässt sich in einfacher Weise ein Anschlag realisieren, der dann zusammenwirkend mit dem Vorsprung am Fachboden selbst und der ersten Nut oder der ersten nutartigen Aufnahme am Boden des Aufbewahrungskastens für eine stabile, definierte Position des Aufbewahrungskastens in der verkippten Stellung sorgt.

In Weiterbildung der Erfindung ist die Querstrebe an der Unterseite eines Fachbodens angeordnet oder durch die Unterseite eines Fachbodens gebildet.

Auf diese Weise kann der Anschlag in sehr einfacher Weise realisiert werden.

In Weiterbildung der Erfindung ist der Fachboden mit einem in Auszugsrichtung des Aufbewahrungskastens verlaufenden Längsvorsprung versehen und der Aufbewahrungskasten ist mit einer zu dem Längsvorsprung passenden und in Längsrichtung verlaufenden zweiten Nut oder einer zweiten nutartigen Aufnahme an der Unterseite des Bodens versehen.

Mittels eines solchen Längsvorsprungs und der zweiten Nut oder zweiten nutartigen Aufnahme kann verhindert werden, dass der Aufbewahrungskasten beim Herausziehen aus dem Regal seitlich verrutscht. Die zweite Nut oder die zweite nutartige Aufnahme kann auch als Aufnahme für ein Halteband dienen, mit dem der Aufbewahrungskasten bei aufgesetztem Deckel umreift wird. Vorteilhafterweise ist die zweite Nut oder die zweite nutartige Aufnahme so ausgebildet, dass das Halteband die Längsführung des Aufbewahrungskastens durch den Längsvorsprung am Fachboden nicht behindert.

Weitere Merkmale und Vorteile der Erfindung ergeben sich aus den Ansprüchen und der folgenden Beschreibung bevorzugter Ausführungsformen der Erfindung im Zusammenhang mit den Zeichnungen. Einzelmerkmale der unterschiedlichen, dargestellten Ausführungsformen können dabei in beliebiger Weise und auch ohne die weiteren Merkmale, mit denen sie im Zusammenhang beschrieben sind, miteinander kombiniert werden, ohne den Rahmen der Erfindung zu überschreiten. In den Zeichnungen zeigen:
- Fig. 1: eine Ansicht eines Aufbewahrungskastens von schräg oben,
- Fig. 2: eine Seitenansicht des Aufbewahrungskastens der Fig. 1,
- Fig. 3: eine Ansicht des Aufbewahrungskastens der Fig. 1 von schräg unten,
- Fig. 4: eine abschnittsweise Ansicht eines Regals mit drei Aufbewahrungskästen,
- Fig. 5: eine Schnittansicht des Regals der Fig. 4,
- Fig. 6: eine weitere Schnittansicht des Regals der Fig. 4,
- Fig. 7: eine geschnittene Darstellung des Regals der Fig. 4 ohne die Aufbewahrungskästen,
- Fig.8: den Aufbewahrungskasten der Fig. 1 von schräg oben mit Deckel,
- Fig. 9: zwei der Aufbewahrungskästen der Fig. 1 in gestapeltem Zustand,
- Fig. 10: die beiden gestapelten Aufbewahrungskästen der Fig. 9 in einer Ansicht von vorne,
- Fig. 11: den Aufbewahrungskastens der Fig. 8 von vorne,
- Fig. 12: eine Schnittansicht des Aufbewahrungskastens der Fig. 8,
- Fig. 13: eine Ansicht eines Aufbewahrungskasten gemäß einer weiteren Ausführungsform von schräg oben,
- Fig. 14: eine Seitenansicht des Aufbewahrungskastens der Fig. 13,
- Fig. 15: eine Ansicht des Aufbewahrungskastens der Fig. 13 von schräg unten,
- Fig. 16: eine Ansicht des Aufbewahrungskastens der Fig. 13 von unten,
- Fig. 17: eine Ansicht des Aufbewahrungskastens der Fig. 13 von vorne und
- Fig. 18: eine Ansicht des Aufbewahrungskastens der Fig. 13 von schräg oben hinten.

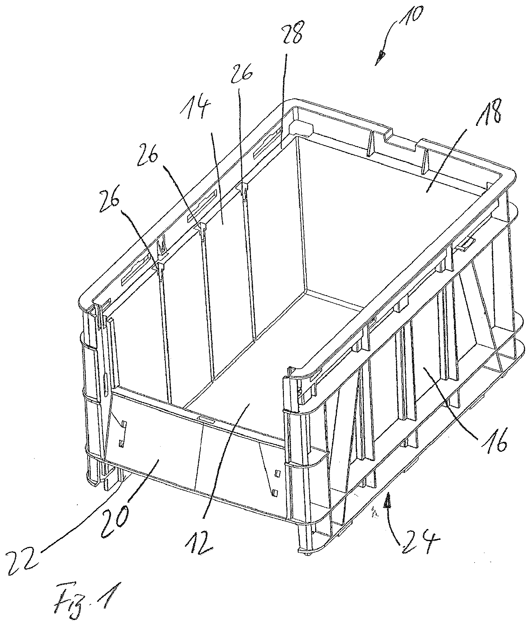

Fig. 1 zeigt einen Aufbewahrungskasten 10 in einer Ansicht von schräg oben. Der Aufbewahrungskasten ist für Kleinteile vorgesehen, beispielsweise Schrauben. Der Aufbewahrungskasten weist einen Boden 12, eine erste Seitenwand 14 und eine zweite Seitenwand 16 auf. Die beiden Seitenwände 14, 16 sind senkrecht zu dem Boden 12 angeordnet und liegen in Querrichtung des Aufbewahrungskastens einander gegenüber. Eine Rückwand 18 und eine Vorderwand 20 liegen einander in Längsrichtung des Aufbewahrungskastens 10 gegenüber und verlaufen parallel zur Querrichtung des Aufbewahrungskastens 10. Die Vorderwand 20 ist lediglich etwa halb hoch ausgeführt, um den Eingriff in den Aufbewahrungskasten zu erleichtern. Die Vorderwand 20 kann durch ein klappbares Sichtfenster zur vollen Höhe ergänzt werden, das allerdings nicht dargestellt ist. Auf die Vorderwand 20 können auch beispielsweise Schriftfelder aufgeklipst werden, um anzuzeigen, was sich in dem Aufbewahrungskasten 10 befindet. An der Vorderwand 20 kann auch ein Schieber auf zwei unterschiedlichen Farbfeldern angeordnet werden, der beispielsweise anzeigt, ob die Kleinteile im Aufbewahrungskasten 10 nachbestellt sind oder dergleichen. Die Vorderwand 20 ist nicht senkrecht zum Boden 12 angeordnet, sondern leicht schräg hierzu. Ein Winkel zwischen der vorderen Seitenwand 20 und dem Boden 12 beträgt dadurch weniger als 90°. Wenn ein Schriftfeld auf der Vorderwand 20 vorgesehen ist, so ist dieses Schriftfeld dadurch für einen vor der Aufbewahrungsbox 10 stehenden Bediener sehr gut erkennbar.

In Verlängerung der ersten Seitenwand 14 ist unterhalb des Bodens 12 eine erste Sockelwand 22 vorgesehen und in Verlängerung der zweiten Seitenwand 16 ist unterhalb des Bodens 12 eine zweite Sockelwand 24 vorgesehen, wobei die zweite Sockelwand 24 in der Ansicht der Fig. 1 nicht erkennbar ist.

Die Seitenwände 14, 16, sind auf ihrer Außenseite mehrfach verstrebt, um den Aufbewahrungskasten 10 zu versteifen. Der Aufbewahrungskasten 10 besteht beispielsweise aus Kunststoffspritzguss.

Die erste Seitenwand 14 ist auf ihrer Innenseite mit Nuten 26 versehen, die in Querrichtung gesehen gegenüber von gleichartigen Nuten in der Seitenwand 16 liegen. Die Nuten 26 erstrecken sich bis zum Boden 12 und dienen zum Einschieben von Trennstegen oder Trennwänden. Die Nuten 26 enden an einem über die Seitenwände 14, 18 und 16 umlaufenden Absatz 28. Dieser Absatz ragt in den Innenraum des Aufbewahrungskastens 10 hinein und dient als Auflage für einen in Fig. 1 nicht dargestellten Deckel. Der umlaufende Absatz 28 ist unterhalb der Oberkante der Seitenwände 14, 18, 16 angeordnet. Es ist dadurch möglich, den Deckel unterhalb dieser Oberkanten anzuordnen. Dadurch können auch bei aufgesetztem Deckel mehrere Aufbewahrungsboxen 10 gestapelt werden. Die gegenüberliegende zweite Seitenwand ist ebenfalls mit identischen Nuten 26 versehen.

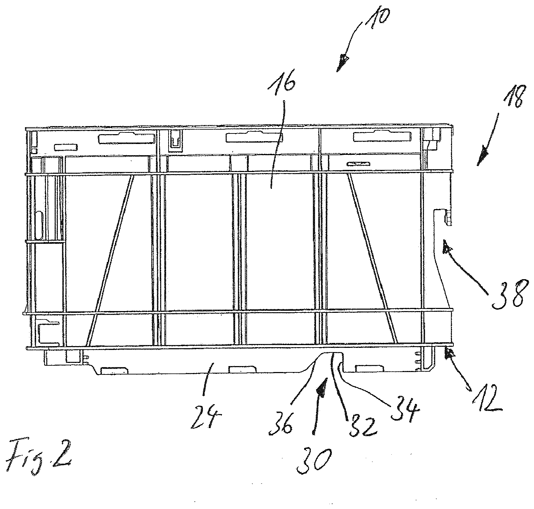

Die Darstellung der Fig. 2 zeigt die Aufbewahrungsbox 10 der Fig. 1 in einer Seitenansicht. Der Blick ist in Fig. 2 auf die zweite Seitenwand 16 gerichtet. Zu erkennen ist die zweite Sockelwand 24, die sich in Verlängerung der zweiten Seitenwand 16 unterhalb des Bodens 12 erstreckt.

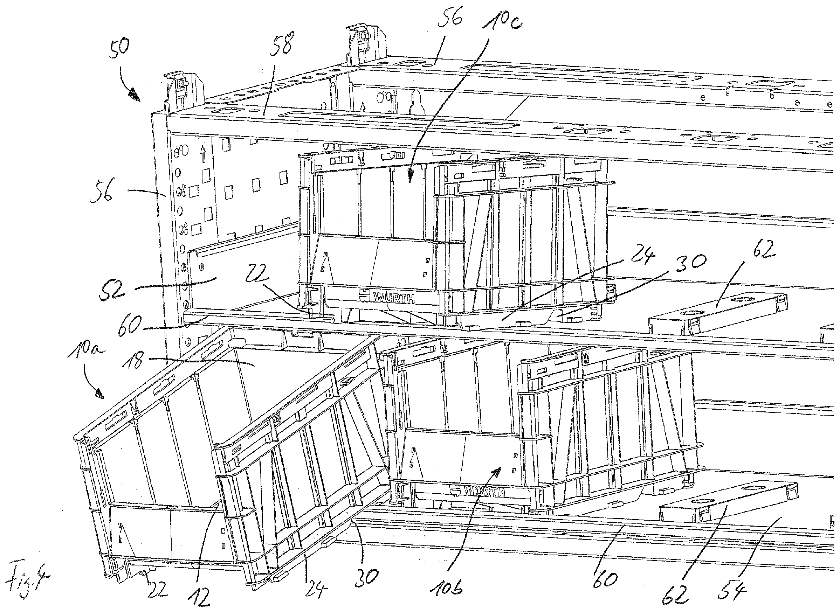

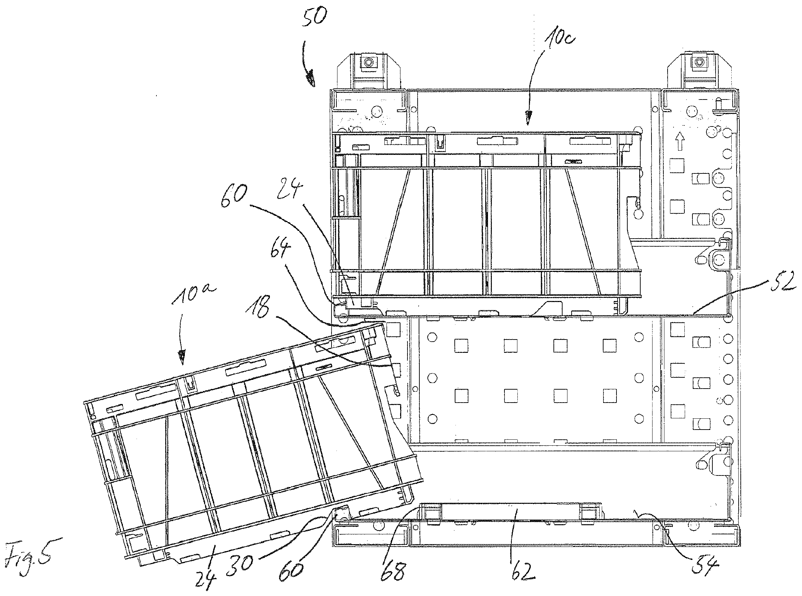

Die zweite Sockelwand 24 weist im Bereich einer hinteren Hälfte des Bodens 12 eine Ausnehmung 30 auf. Die Ausnehmung 30 fluchtet mit einer gleichartigen Ausnehmung in der ersten Sockelwand 22. Die beiden Ausnehmungen 30 in der ersten Sockelwand 22 und der zweiten Sockelwand 24 definieren dadurch eine in Querrichtung der Aufbewahrungsbox 10 verlaufende erste Nut. Diese erste Nut ermöglicht ein kontrolliertes Verkippen des Aufbewahrungskastens 10. Greift ein Vorsprung in die Ausnehmungen 30 bzw. in die durch die Ausnehmungen 30 definierte erste Nut ein, so lässt sich der Aufbewahrungskasten 10 um diesen Vorsprung kippen. Dies ist beispielsweise in Fig. 4 und Fig. 5 zu erkennen.

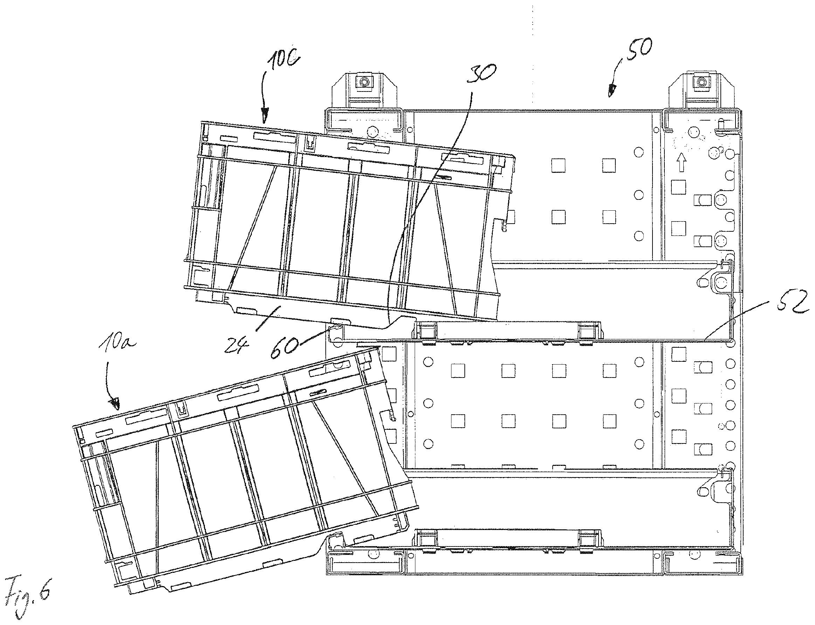

Die Ausnehmung 30 weist einen Grund 32 und eine erste, senkrecht zum Grund 32 angeordnete Seitenwand 34 auf. Eine zweite Seitenwand 36 der Ausnehmung 30 verläuft schräg zum Grund 32 und damit auch schräg zum Boden 12. Die Seitenwand 36 verläuft schräg vom Boden 12 weg und in Richtung auf das vordere Ende des Aufbewahrungskastens 10, das in Fig. 2 links angeordnet ist. Die zweite Seitenwand 36 der Ausnehmung 30 schafft dadurch den nötigen Raum, um den Aufbewahrungskasten 10 um einen Vorsprung, der dann in der Ausnehmung 30 liegt, verkippen zu können, vgl. Fig. 6. In der Darstellung der Fig. 2 würde die Verkippung gegen den Uhrzeigersinn erfolgen. Auch erlaubt es die schräg angeordnete Seitenwand 36, den Aufbewahrungskasten 10 in einfacher Weise wieder in das Regal zurückzuschieben, da die schräge Seitenwand 36 dann als Anlaufschräge dient, siehe auch Fig. 6.

Die Rückwand 18 des Aufbewahrungskastens 10 ist mit einer hakenförmigen Ausbildung 38 versehen. Mittels dieser hakenförmigen Ausbildung 38 kann der Aufbewahrungskasten 10 auf einen passenden Vorsprung, beispielsweise eine Halteschiene, gehängt werden. Dies ist beispielsweise sinnvoll, wenn ein Bediener den Aufbewahrungskasten 10 aus dem Regal entnimmt und an eine passende Halteschiene im Bereich einer Werkbank hängt. Der Inhalt des Aufbewahrungskastens 10 ist dann für den Bediener problemlos zugänglich, ohne dass der Aufbewahrungskasten 10 auf der Werkbank selbst Platz in Anspruch nimmt.

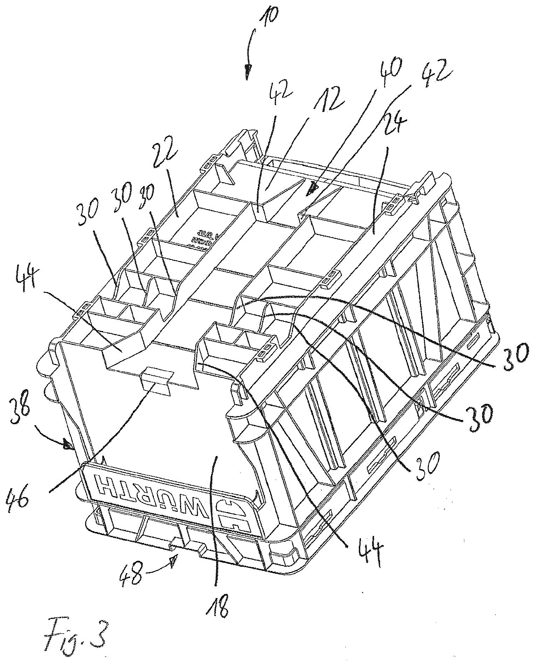

Auf Höhe des Bodens 12 ist ein Bodenflansch 37 vorgesehen, der sich von der Seitenwand 16 aus nach außen vom Innenraum weg erstreckt. Am Bodenflansch 37 beginnt die Sockelwand 24. Der Bodenflansch 37 ist auch an der Rückwand 18 und an der ersten Seitenwand 14 vorgesehen, siehe Fig. 3. Der Bodenflansch 37 liegt im gestapelten Zustand zweier Aufbewahrungskästen 10 auf den Oberkanten der Seitenwände und der Rückwand eines unteren Aufbewahrungskastens auf.

Die Darstellung der Fig. 3 zeigt den Aufbewahrungskasten 10 in einer Ansicht von schräg unten. In Fig. 3 ist die dritte, hintere Seitenwand 18 mit der hakenförmigen Aufnahme 38 dem Betrachter zugewandt.

In der Darstellung der Fig. 3 sind die erste Sockelwand 22 und die zweite Sockelwand 24 gut zu erkennen. Wie bereits ausgeführt wurde, weisen sowohl die erste Sockelwand 22 als auch die zweite Sockelwand 24 jeweils eine Ausnehmung 30 auf, wobei die beiden Ausnehmungen 30 in Querrichtung der Aufbewahrungsbox 10 fluchten und dadurch die erste Nut definieren, die in Querrichtung des Aufbewahrungskastens 10 verläuft. Unterhalb des Bodens 12 sind, wie in Fig. 3 zu erkennen ist, zahlreiche Versteifungsrippen vorgesehen. Insgesamt vier dieser Versteifungsrippen sind ebenfalls mit Ausnehmungen 30 versehen, die die gleiche Form und Anordnung wie die Ausnehmungen 30 in den beiden Sockelwänden 22, 24 aufweisen. Alle Ausnehmungen 30 sind fluchtend zueinander angeordnet und definieren dadurch die erste Nut, die in Querrichtung des Aufbewahrungskastens verläuft.

Die Versteifungsrippen auf der Unterseite des Bodens definieren auch eine zweite Nut 40, die in Längsrichtung des Aufbewahrungskastens 10 unterhalb des Bodens verläuft. Die zweite Nut 40 ist mittig unterhalb des Bodens 12 angeordnet.

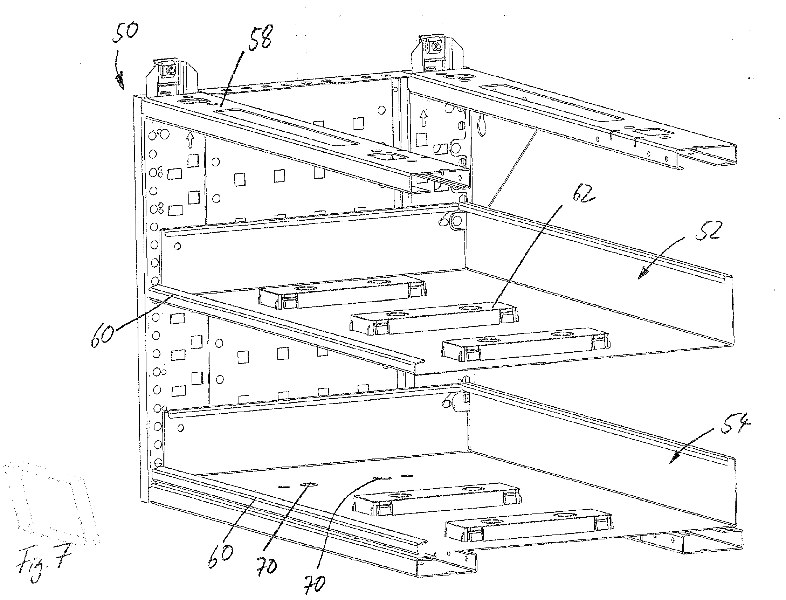

Wie in Fig. 3 zu erkennen ist, ist eine Querabmessung der zweiten Nut im vorderen Bereich, der in Fig. 3 rechts oben angeordnet ist, kleiner als im mittleren Bereich. Dadurch werden zwei Endanschläge 42 definiert, die beim Einschieben der Aufbewahrungskasten 10 in ein Regal an einem Längsvorsprung auf dem Fachboden eines Regals anschlagen, siehe auch Fig. 7, und dadurch eine vollständig eingeschobene Position des Aufbewahrungskastens 10 definieren und auch verhindern, dass der Aufbewahrungskasten 10 an einer Rückwand des Regals anschlägt.

Im hinteren Bereich, also kurz vor der hinteren Seitenwand 18, weitet sich die zweite Nut 40 durch schräg nach außen verlaufende Wände 44 kontinuierlich auf. Eine solche Aufweitung erleichtert das Einschieben des Aufbewahrungskastens 10 in den Fachboden und auf den Längsvorsprung auf dem Fachboden, siehe auch Fig. 7.

Am Übergang zwischen der zweiten Nut 40 und der Rückwand 18 ist eine sich über die Ecke zwischen dem Boden 12 und der hinteren Seitenwand 18 erstreckende Vertiefung 46 vorgesehen. Diese Vertiefung 46 dient zur seitlichen Fixierung eines Haltebands 47, das in Fig. 3 lediglich abschnittsweise angedeutet ist. Das Halteband 47 umschlingt den Aufbewahrungskasten 10 vollständig und kann beispielsweise einen Deckel auf dem Aufbewahrungskasten 10 halten. Das Halteband 47 stört dennoch nicht das Stapeln und Anordnen in einem Regal, da es an kritischen Stellen versenkt geführt ist. Auch eine Ausnehmung 48 in der Oberkante der hinteren Seitenwand 18 dient zum Fixieren des Haltebands 47.

Die Darstellung der Fig. 4 zeigt ein erfindungsgemäßes Regal 50, wobei in dem Regal 50 drei Aufbewahrungskästen 10a, 10b und 10c angeordnet sind.

Das Regal 50 weist zwei Fachböden 52, 54 auf, die parallel zueinander in unterschiedlichen Höhen an einer Seitenwand 56 des Regals 50 angeordnet sind. Eine der Seitenwand 56 gegenüberliegende Seitenwand ist in der Darstellung der Fig. 4 nicht zu erkennen.

Oberhalb des Fachbodens 52 sind an der Seitenwand 56 eine vordere Querstrebe 58 und eine hintere Querstrebe 56 befestigt.

Die beiden Fachböden 52, 54 sind an ihrer in Fig. 4 dem Betrachter zugewandten Vorderkante jeweils mit einem Vorsprung 60 versehen. Dieser Vorsprung 60 ist in Form einer Aufkantung realisiert.

Der Aufbewahrungskasten 10a ist in einem teilweise aus dem Regal 50 ausgezogenen und verkippten Zustand dargestellt. In diesem teilweise ausgezogenen und verkippten Zustand greift der Vorsprung 60 des unteren Fachbodens 54 in die Ausnehmung 30 in den unteren Sockelwänden 24, 22 des Aufbewahrungskastens 10a ein. Der Aufbewahrungskasten 10 kann dadurch nicht weiter aus dem Regal herausgezogen werden und, da die Ausnehmungen 30 im Bereich der hinteren Hälfte des Bodens 12 angeordnet sind, hat der Aufbewahrungskasten 10a ein leichtes Übergewicht nach vorne und kippt dadurch nach unten. Diese Kippbewegung des Aufbewahrungskastens 10a wird dadurch beschränkt, dass die Oberkante der Rückwand 18 an der Unterseite des Vorsprungs 60 des oberen Fachbodens 52 anschlägt. Die in Fig. 4 dargestellte, teilweise ausgezogene und verkippte Position der Aufbewahrungsbox 10a ist dadurch definiert und sicher. Speziell wird durch das Eingreifen des Vorsprungs 60 in die Ausnehmungen 30 bzw. in die durch die Ausnehmungen 30 definierte erste Nut ein weiteres Herausziehen des Aufbewahrungskastens 10a verhindert. Würde im Zustand des Aufbewahrungskastens 10a der Fig. 4 ein Bediener versuchen, der Aufbewahrungskasten 10a nach vorne aus dem Regal 50 herauszuziehen, so würde dies durch den Anschlag des Vorsprungs 60 des unteren Fachbodens 54 an der Seitenwand 34 der Ausnehmungen 30 verhindert, siehe auch Fig. 2.

Ein weiteres Verkippen des Aufbewahrungskastens 10a wird, wie ausgeführt wurde, durch das Anschlagen der Oberkante der Rückwand 18 an der Unterseite des Fachbodens 52 bzw. der Unterseite des Vorsprungs 60 verhindert.

Der Aufbewahrungskasten 10b ist im Zustand der Fig. 4 vollständig in das Regal 50 eingeschoben. Es ist zu erkennen, dass der Vorsprung 60 des unteren Fachbodens 54 in diesem Zustand verhindert, dass der Aufbewahrungskasten 10b nach vorne aus dem Regal 50 herausgezogen wird.

Um den Aufbewahrungskasten 10b nach vorne aus dem Regal 50 herauszuziehen, muss der Aufbewahrungskasten 10b vorne leicht angehoben werden, so dass die Unterkante der beiden Sockelwände 22, 24 auf der Oberseite des Vorsprungs 60 zu liegen kommt.

In diesem Zustand befindet sich der Aufbewahrungskasten 10c in Fig. 4. Der Aufbewahrungskasten 10c wurde vorne leicht angehoben und die Unterkanten der Sockelwände 22, 24 können nun auf der Oberseite des Vorsprungs 60 des oberen Fachbodens 52 entlanggleiten, bis der Vorsprung 60 dann in die Ausnehmungen 30 in der ersten Sockelwand 22 und der zweiten Sockelwand 24 eingreift. Wird der Aufbewahrungskasten 10c dann losgelassen, so verkippt er automatisch und nimmt dann die teilweise ausgezogene und verkippte Position des Aufbewahrungskastens 10a in Fig. 4 ein.

Soll die Aufbewahrungsbox 10a in den vollständig eingeschobenen Zustand des Aufbewahrungskastens 10b gebracht werden, so muss die Aufbewahrungsbox 10a vorne leicht angehoben werden und dann einfach in Richtung auf das Regal 50 zurückgeschoben werden.

Die vorderen Seitenwände 36 der Ausnehmungen 30, siehe Fig. 2, wirken dann als Anlaufschräge und heben den Aufbewahrungskasten 10a leicht an, so dass die Unterkanten der Sockelwände 22, 24 dann auf der Oberseite des Vorsprungs 60 des unteren Fachbodens 54 entlanggleiten können, bis der Aufbewahrungskasten 10 vollständig hinter dem Vorsprung 60 angeordnet ist.

Bei den beschriebenen Auszugsbewegungen und Einschubbewegungen der Aufbewahrungskästen 10a, 10b, 10c dienen jeweils Längsvorsprünge 62 auf den Fachböden 52, 54 als Längsführungen für die Aufbewahrungskästen 10a, 10b, 10c. Wie bereits erörtert wurde, greifen die Längsvorsprünge 62 in die zweite Nut 40 am Boden der Aufbewahrungskästen 10a, 10b, 10c ein, vgl. Fig. 3. Im vollständig eingeschobenen Zustand des Aufbewahrungskastens 10b schlägt dann eine in Fig. 4 dem Betrachter zugewandte Vorderseite eines Längsvorsprungs 62 an den Anschlägen 42 am Boden 12 der Aufbewahrungsbox 10b an, siehe auch Fig. 3, und definiert dadurch die vollständig eingeschobene Position des Aufbewahrungskastens 10b.

Wird der Aufbewahrungskasten 10c in den teilweise ausgezogenen und verkippten Zustand des Aufbewahrungskastens 10a gebracht, so schlägt die Oberkante der hinteren Seitenwand des Aufbewahrungskastens 10c an dem vorderen Querträger 58 an. Der Querträger 58 übernimmt dann die Funktion eines als Anschlag wirkenden Fachbodens.

Die Darstellung der Fig. 5 zeigt eine seitliche Schnittansicht des Regals 50 der Fig. 4, wobei lediglich der Aufbewahrungskasten 10a im teilweise ausgezogenen und verkippten Zustand dargestellt ist. Der Aufbewahrungskasten 10c ist hingegen im vollständig eingeschobenen Zustand dargestellt, der Aufbewahrungskasten 10b ist nicht dargestellt.

Anhand des Aufbewahrungskastens 10a ist gut zu erkennen, wie der Vorsprung 60 an der Vorderkante des unteren Fachbodens 54 in die Ausnehmung 30 in der Sockelwand 24 des Aufbewahrungskastens 10a eingreift. Der Vorsprung 60 wirkt dadurch als Drehachse für das Verkippen des Aufbewahrungskastens 10a.

Die Oberkante der Rückwand 18 schlägt dann an der Unterseite des oberen Fachbodens 52 an. Bei der Ausführungsform der Fig. 5 ist an der Unterseite des Fachbodens 52 noch eine Profilleiste 64 vorgesehen, um einen definierten Anschlag zu schaffen. Die Profilleiste 64 kann beispielsweise aber auch durch eine sich nach unten erstreckende Ausprägung am Fachboden 52 ersetzt werden oder die Oberkante der Rückwand 18 kann auch unmittelbar an der Unterseite des Fachbodens 52 anschlagen.

Wesentlich ist, dass die Kippbewegung des Aufbewahrungskastens 10a durch das Anschlagen der Oberkante der Rückwand 18 an einem geeigneten Anschlag begrenzt ist, so dass der Aufbewahrungskasten 10a zwar für einen Bediener sehr gut zugänglich ist, trotzdem aber sicher verhindert wird, dass der Aufbewahrungskasten 10a aus dem Regal 50 herausrutscht oder herauskippt. Die Anordnung des Anschlags und insbesondere die Höhe des Anschlags über dem Vorsprung 60 definiert den Kippwinkel des Aufbewahrungskastens 10a.

Der Aufbewahrungskasten 10c ist im vollständig eingeschobenen Zustand dargestellt. In diesem vollständig eingeschobenen Zustand liegt die Vorderkante der Sockelwand 24 an der Hinterkante des Vorsprungs 60 des Fachbodens 52 an. Gleichzeitig schlägt, wie bereits erläutert wurde, eine Vorderkante 68 des Längsvorsprungs 62 an den Anschlägen 42 der zweiten Nut 40 am Boden 12 des Aufbewahrungskastens 10c an, siehe auch Fig. 3. Der Aufbewahrungskasten 10c ist in der vollständig eingeschobenen Stellung dadurch in und entgegen der Längsrichtung sicher fixiert.

Um den Aufbewahrungskasten 10c aus dem Regal 50 herauszuziehen, muss, wie bereits erörtert wurde, der Aufbewahrungskasten 10c vorne, in Fig. 5 also links, leicht angehoben werden, bis die Vorderkante der Sockelwände 22, 24 über den Vorsprung 60 hinausrutscht und dadurch dann die Unterkanten der Sockelwände 22, 24 auf der Oberseite des Vorsprungs 60 aufliegen. In diesem Zustand kann dann, siehe den Zustand des Aufbewahrungskastens 10c in Fig. 4, der Aufbewahrungskasten 10c teilweise aus dem Regal 50 herausgezogen werden.

Soll der Aufbewahrungskasten 10a vollständig aus dem Regal 50 entnommen werden, muss der Aufbewahrungskasten 10a vorne, in Fig. 5 also links, angehoben werden, bis der Vorsprung 60 aus der Ausnehmung 30 herausrutscht. Der Aufbewahrungskasten 10a kann dann schräg nach oben aus dem Regal 50 entnommen werden.

Zum Einsetzen des Aufbewahrungskastens 10a in das Regal 50 werden wieder die Unterkante der Sockelwände 22, 24 auf die Oberseite des Vorsprungs 60 aufgesetzt und der Aufbewahrungskasten 10a dann nach hinten, in Fig. 5 also nach rechts geschoben, bis der Vorsprung 60 in die Ausnehmungen 30 einrastet. Ausgehend von diesem Zustand kann der Aufbewahrungskasten 10a dann, wie beschrieben wurde, in einfacher Weise weiter nach hinten bis in den vollständig eingeschobenen Zustand geschoben werden.

Die Darstellung der Fig. 6 zeigt eine der Fig. 5 vergleichbare Ansicht. Im Unterschied zum Zustand der Fig. 5 sind in Fig. 6 die Aufbewahrungskästen 10a, 10b dargestellt. Der Aufbewahrungskasten 10a befindet sich im teilweise ausgezogenen und verkippten Zustand, der bereits anhand der Fig. 5 beschrieben wurde. Der Aufbewahrungskasten 10b befindet sich im teilweise ausgezogenen Zustand, siehe auch Fig. 3. Es ist zu erkennen, dass die Unterkanten der Seitenwände 22, 24 auf der Oberseite des Vorsprungs 60 des Fachbodens 52 aufliegen und der Aufbewahrungskasten 10c dadurch nach vorne gezogen werden kann, bis der Vorsprung 60 in die Nuten 30 in den Sockelwänden 22, 24 einrastet.

Die Darstellung der Fig. 7 zeigt abschnittsweise lediglich das Regal 50. Gut zu erkennen sind in dieser Ansicht die Fachböden 52, 54, die gegenüber dem Vorsprung 60 eine aufgekantete Rückwand aufweisen. Senkrecht zur Rückwand sind einander gegenüberliegend zwei aufgekantete Seitenwände vorgesehen. Die beiden aufgekanteten Seitenwände, die aufgekantete Rückwand und der Vorsprung 60 sorgen für eine äußerst stabile Ausbildung der Fachböden 52, 54, selbst wenn eine vergleichsweise dünne Blechstärke verwendet wird.

Die Längsvorsprünge 62 bestehen beispielsweise aus Kunststoff und werden in vorbereitete Ausnehmungen 70 in den Fachböden 52, 54 mit geeigneten Rastmitteln eingeclipst.

Oberhalb des Fachbodens 52 ist kein Fachboden mehr angeordnet. Wie bereits erläutert wurde, dient der vordere Querträger 58 dann als Anschlag für die Oberkante der hinteren Seitenwand eines Aufbewahrungskastens, wenn dieser in die teilweise ausgezogene und verkippte Position gebracht wird, siehe auch Fig. 6.

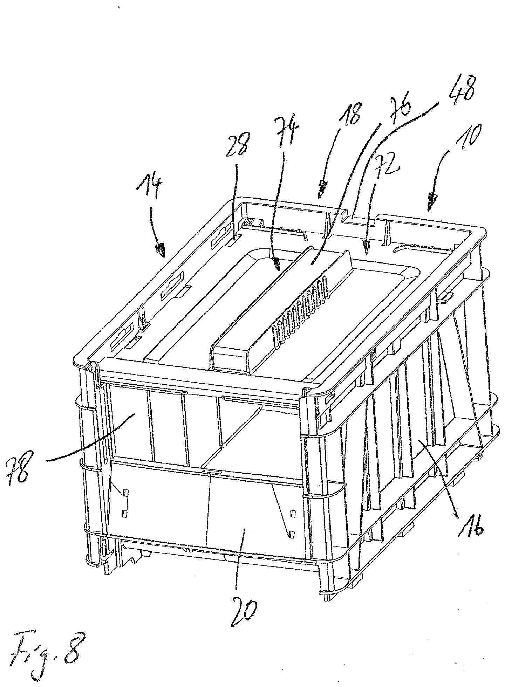

Die Darstellung der Fig. 8 zeigt den Aufbewahrungskasten 10 der Fig. 1 in einer Ansicht von schräg oben, wobei ein Deckel 72 in den Aufbewahrungskasten 10 eingesetzt wurde. Der Deckel 72 liegt auf dem umlaufenden Absatz 28 auf, der unterhalb der Oberkanten der Seitenwände 14, 16, 18 angeordnet ist, wie anhand der Fig. 1 bereits erläutert wurde.

Der Deckel 72 weist einen Griff 74 auf, der sich nach oben erstreckt und in Form eines länglichen Vorsprungs realisiert ist. An seinen Seitenflächen weist der Griff 74 Riffelungen auf, die das Greifen des Deckels erleichtern.

Auf der Oberseite des Griffs 74 ist dieser mit einer dritten Nut 76 versehen. Die dritte Nut 76 entspricht in ihrer Breite einer Ausnehmung 78 in der Oberkante der hinteren Seitenwand 18 und die dritte Nut 76 ist fluchtend zu dieser Ausnehmung 78 angeordnet. In der Nut 76 kann ein Halteband angeordnet werden, das um den Aufbewahrungskasten 10 und den Deckel 72 geschlungen wird, um den Deckel 72 sicher auf den Aufbewahrungskasten 10 zu halten. Wie bereits erläutert wurde, läuft das Halteband dann auch an der Unterseite des Bodens 12 entlang, siehe Fig. 3, und ist dort in der zweiten Nut 40 aufgenommen.

Der Griff 74 des Deckels 72 ist dabei so ausgebildet, dass er im aufgesetzten Zustand mit seiner Oberseite unterhalb der Oberkanten der Seitenwände 14, 16 und der Rückwand 18 liegt. Auch das Halteband ist dann noch unterhalb der Oberkanten der Seitenwände 14, 16 und der Rückwand 18 angeordnet. Auf der Unterseite des Aufbewahrungskastens 10 verläuft das Halteband in der zweiten Nut 40. Das Halteband stört damit nicht beim Stapeln mehrerer Aufbewahrungskästen 10. Wie ebenfalls beschrieben wurde, stört das Halteband in der zweiten Nut 40 am Boden 12 auch nicht die Anordnung des Aufbewahrungskastens 10 im Regal 50.

In der Darstellung der Fig. 8 ist der Aufbewahrungskasten 10 mit einem Fenster 78 versehen, das die Vorderwand 20 nach oben fortsetzt. Der Innenraum des Aufbewahrungskastens 10 ist dadurch vollständig verschlossen und dennoch kann durch das Fenster 78 der Inhalt des Aufbewahrungskastens 10 erkannt werden. Das Fenster 78 kann nach vorne geklappt werden, um in den Innenraum des Aufbewahrungskastens 10 eingreifen zu können.

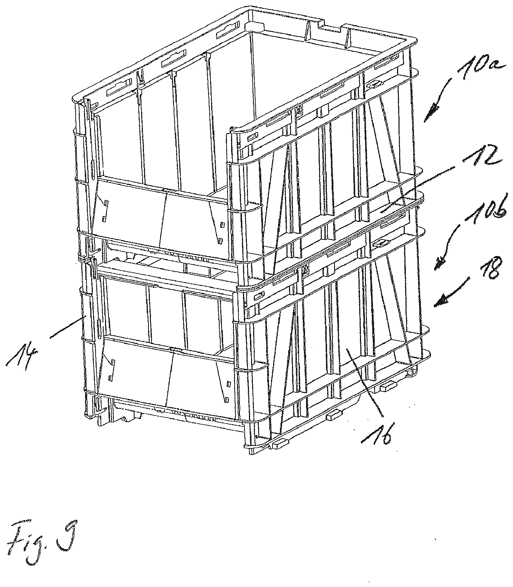

Die Darstellung der Fig. 9 zeigt zwei Aufbewahrungskästen 10a, 10b im gestapelten Zustand. Im gestapelten Zustand liegen die Sockelwände 22, 24 des oberen Aufbewahrungskastens 10a an den Innenseiten der Seitenwände 14, 16, 18 des unteren Aufbewahrungskastens 10b an und sorgen dadurch für eine Fixierung der beiden Aufbewahrungskästen 10a, 10b zueinander in seitlichen Richtungen. Der Bodenflansch 37 des Bodens 12 des oberen Aufbewahrungskastens 10a liegt auf den Oberkanten der Seitenwände 14, 16 und der Rückwand 18 des unteren Aufbewahrungskastens 10b auf und fixiert die beiden Aufbewahrungskästen 10a dadurch in vertikaler Richtung.

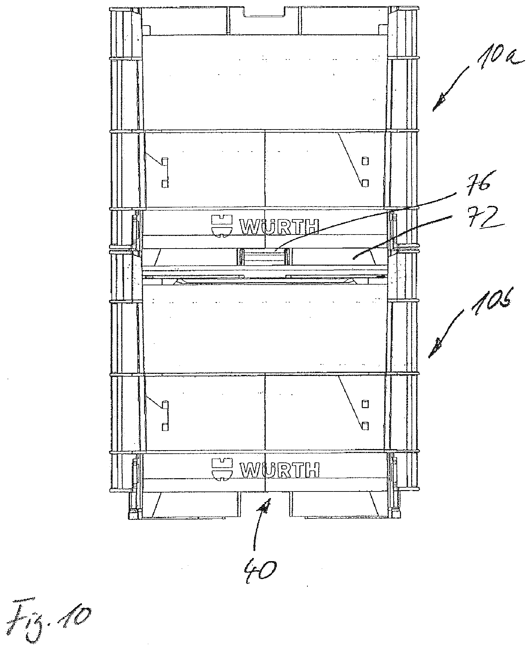

Fig. 10 zeigt die beiden Aufbewahrungskästen 10a, 10b in einer Ansicht von vorne.

In dieser Ansicht ist an dem unteren Aufbewahrungskasten 10b gut zu erkennen, dass der Aufbewahrungskasten 10b mit aufgesetztem Deckel 72 mit einem Halteband umreift werden kann und dennoch der Aufbewahrungskasten 10a problemlos auf den Aufbewahrungskasten 10b aufgesetzt werden kann. Denn das Halteband liegt dann in der dritten Nut 76 im Griff des Deckels 72 und in der zweiten Nut 40 am Boden des Aufbewahrungskastens 10b.

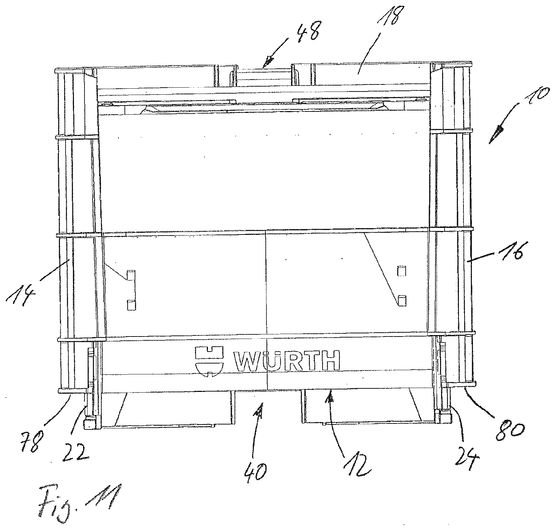

Fig. 11 zeigt den Aufbewahrungskasten 10 der Fig. 1 in einer Ansicht von vorne. Zu erkennen ist die Ausnehmung 48 in der Oberkante der Rückwand 18 zum Aufnehmen des Haltebands und die zweite Nut 40 an der Unterseite des Bodens 12. Gut zu erkennen sind auch die Unterseiten 78, 80 der Seitenwände 14, 16, die Abschnitte des Bodenflanschs 37 bilden und dann in gestapeltem Zustand zweier Aufbewahrungskästen 10 auf den Oberkanten der Seitenwände des unteren Aufbewahrungskastens aufliegen.

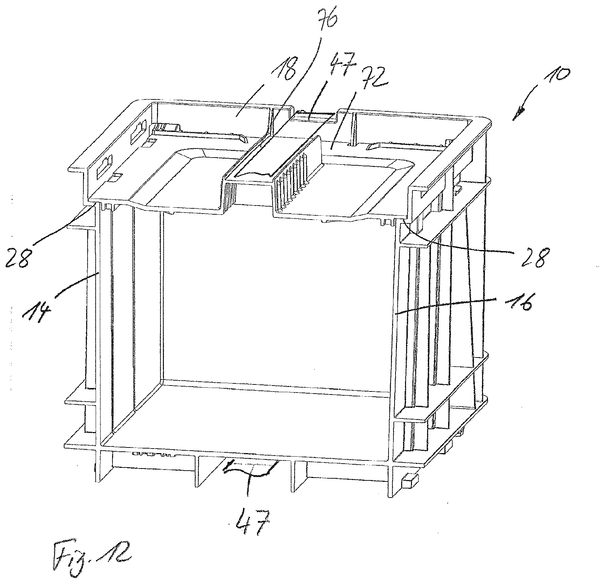

Fig. 12 zeigt den mit einem Deckel versehenen Aufbewahrungskasten 10 der Fig. 8 in einer Schnittansicht. In dieser Schnittansicht ist gut zu erkennen, wie der Rand des Deckels 72 auf dem umlaufenden Absatz 28 aufliegt, der durch die Seitenwände 14, 16 und die hintere Seitenwand 18 gebildet ist. Die Vorderwand 20 erstreckt sich nicht bis auf Höhe des Deckels, so dass der Absatz 28 auch nur um die drei Wände 14, 16, 18 des Aufbewahrungskastens 10 umläuft. Das Halteband 47 ist abschnittsweise eingezeichnet.

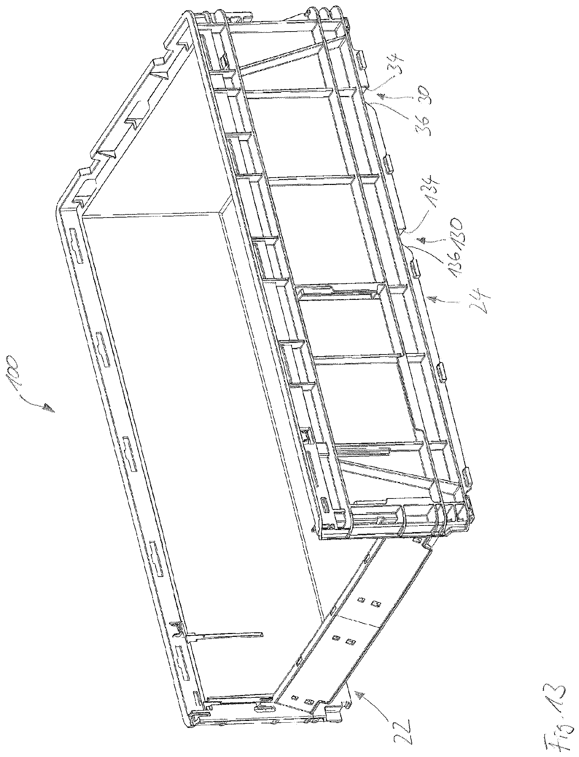

Fig. 13 zeigt einen Aufbewahrungskasten 100 gemäß einer weiteren Ausführungsform der Erfindung. Der Aufbewahrungskasten 100 der Fig. 13 ist prinzipiell sehr ähnlich zu dem Aufbewahrungskasten 10 der Fig. 1 aufgebaut und es werden lediglich die sich von dem Aufbewahrungskasten 10 der Fig. 1 unterscheidenden Merkmale des Aufbewahrungskastens 100 beschrieben. Elemente des Aufbewahrungskastens 100, die identisch oder zumindest funktionsgleich zu Elementen des Aufbewahrungskastens 10 der Fig. 1 sind, werden mit denselben Bezugsziffern bezeichnet.

Der Aufbewahrungskasten 100 weist eine erste Sockelwand 22 und eine zweite Sockelwand 24 auf, die jeweils mit einer Ausnehmung 30 versehen sind. Wie bei dem Aufbewahrungskasten 10 der Fig. 1 definieren diese Ausnehmungen 30 eine erste Nut, die senkrecht zu den Sockelwänden 22, 24 und auch senkrecht zu den Seitenwänden des Aufbewahrungskastens 100 verläuft. Diese erste Nut ist wie bei dem Aufbewahrungskasten 10 der Fig. 1 zum Definieren einer kontrollierten Kippstellung des Aufbewahrungskastens 100 im teilweise ausgezogenen Zustand aus einem Regal vorgesehen, vgl. hierzu die Fig. 4, 5 und 6.

Darüber hinaus sind die erste Sockelwand 22 und die zweite Sockelwand 24 jeweils mit Ausnehmungen 130 versehen, die eine vierte Nut definieren, die parallel zu der ersten Nut und damit senkrecht zu den Sockelwänden 22, 24 und den Seitenwänden des Aufbewahrungskastens 100 verläuft. Auch die Ausnehmungen 130 sind noch in der in der in Fig. 13 rechten Hälfte des Bodens des Aufbewahrungskastens 100 angeordnet. Wird der Aufbewahrungskasten 100 daher um die vierte Nut, die durch die Ausnehmungen 130 definiert ist, verkippt, so hat der in Fig. 13 links der Ausnehmung 130 angeordnete Abschnitt des Aufbewahrungskastens 100 im leeren oder gleichmäßig beladenen Zustand das Übergewicht, so dass der Aufbewahrungskasten 100 eine stabile Kippstellung einnehmen kann, in der er um die vierte Nut verkippt ist. Auch diese zweite stabile Kippstellung wird dadurch erreicht, vgl. wieder die Fig. 4 bis 6, dass an einem Regal Mittel zum Eingreifen in die vierte Nut vorgesehen sind und im verkippten Zustand das obere, hintere Ende des Aufbewahrungskastens 100 an der Unterseite eines Fachbodens des Regals oder an einem entsprechend vorgesehenen Anschlag anschlägt.

Die Ausnehmungen 130 in der ersten Sockelwand 22 bzw. der zweiten Sockelwand 24 weisen jeweils eine hintere Seitenwand 134 und eine abgeschrägte vordere Seitenwand 136 auf. Die Ausnehmungen 130 sind im Übrigen identisch zu den Ausnehmungen 30 ausgebildet.

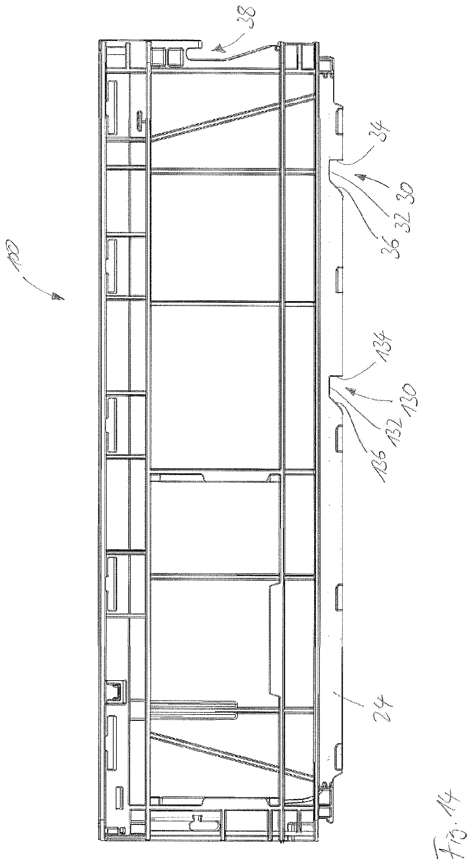

Die Seitenansicht des Aufbewahrungskastens 100 der Fig. 14 zeigt die Anordnung der Ausnehmungen 30 und 130 in der zweiten Sockelwand 24 sehr deutlich. Sowohl die Ausnehmung 30 als auch die Ausnehmung 130 sind in Fig. 14 rechts der Mitte des Aufbewahrungskastens 100 angeordnet. Die Ausnehmungen 30 und 130 sind identisch ausgebildet und in Längsrichtung des Aufbewahrungskastens 100, in Fig. 14 also von links nach rechts bzw. von rechts nach links, voneinander beabstandet. Die erste Nut, die durch die Ausnehmungen 30 in den Sockelwänden 22, 24 definiert wird, verläuft senkrecht zu den Sockelwänden und den Seitenwänden des Aufbewahrungskastens 100, in Fig. 14 also senkrecht zur Zeichenebene. Auch die vierte Nut, die durch die Ausnehmungen 130 definiert ist, verläuft senkrecht zu den Seitenwänden des Aufbewahrungskastens und damit parallel zur ersten Nut.

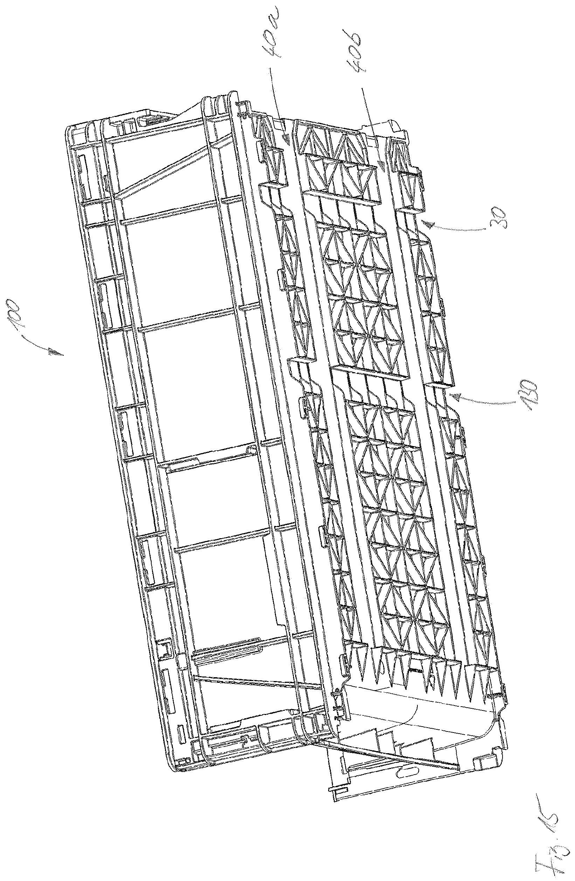

Fig. 15 zeigt eine Ansicht des Aufbewahrungskastens 100 von schräg unten. Zu erkennen sind die erste Nut, die durch die Ausnehmungen 30 definiert ist und die hierzu parallel verlaufende vierte Nut, die durch die Ausnehmungen 130 definiert ist.

In Fig. 15 geht der Blick auf den Boden des Aufbewahrungskastens 100 und im Unterschied zum Aufbewahrungskasten 10, vgl. Fig. 3, sind im Boden des Aufbewahrungskastens 100 zwei in Längsrichtung des Aufbewahrungskastens 100 verlaufende zweite Nuten 40a, 40b vorgesehen. Diese beiden zweiten Nuten 40a, 40b dienen wie die zweite Nut 40 des Aufbewahrungskastens 10 dazu, den Aufbewahrungskasten 100 beim Einschieben und Ausziehen aus einem Regal in Querrichtung zu führen. Hierzu sind in dem Regal Anschläge 62 vorgesehen, vgl. Fig. 7. Die beiden zweiten Nuten 40a, 40b können so weit voneinander beabstandet sein, dass die für die Aufbewahrungskästen 10 geeigneten Anschläge 62 in die zweiten Nuten 40a, 40b des Aufbewahrungskastens 100 eingreifen können. In das Regal 50 der Fig. 7 können dann alternativ zwei Aufbewahrungskästen 10 nebeneinander eingeschoben werden oder ein Aufbewahrungskasten 100 anstelle der beiden Aufbewahrungskästen 10.

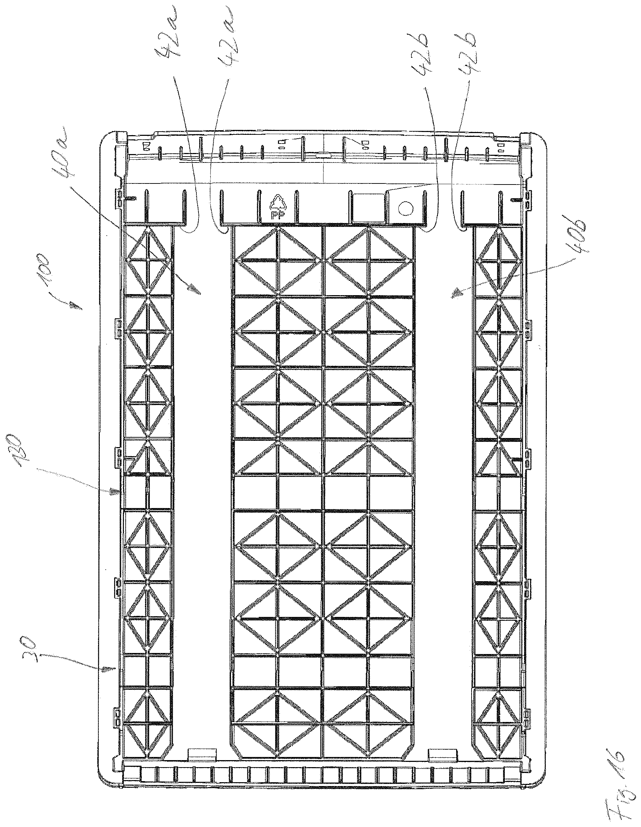

Fig. 16 zeigt den Aufbewahrungskasten 100 von unten. Das in Fig. 16 rechts angeordnete Ende der Nuten 40a, 40b ist jeweils durch Endanschläge 42a bzw. 42b definiert. Durch diese Endanschläge 42a, 42b wird verhindert, dass der Aufbewahrungskasten 100 zu weit in das Regal eingeschoben wird. Die Endanschläge 42a, 42b definieren dadurch eine vollständig in ein Regal eingeschobene Stellung des Aufbewahrungskastens 100.

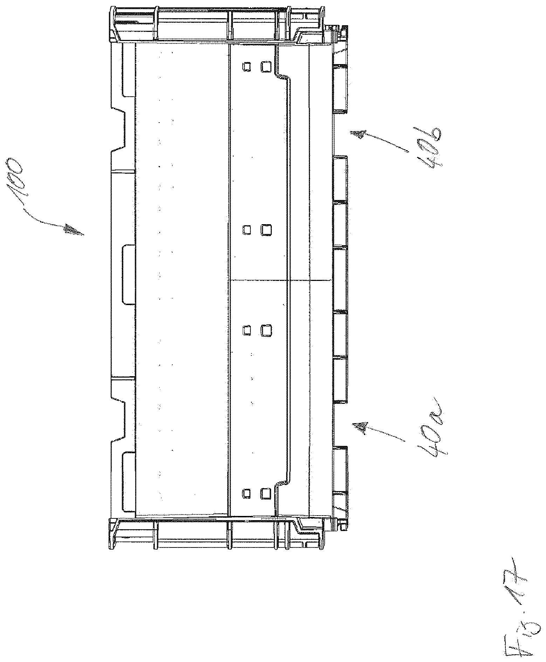

Fig. 17 zeigt den Aufbewahrungskasten 100 in einer Ansicht von vorne. Zu erkennen sind die beiden parallel zueinander verlaufenden zweiten Nuten 40a, 40b.

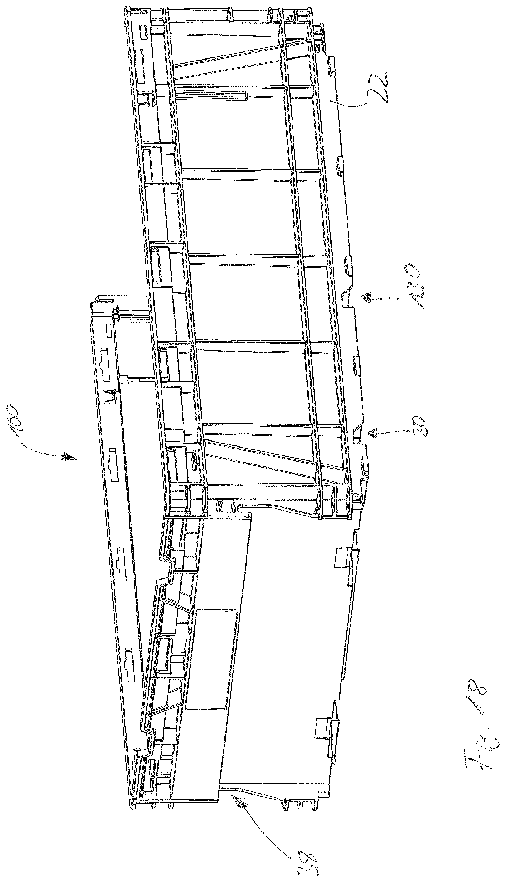

Fig. 18 zeigt den Aufbewahrungskasten 100 in einer Ansicht von schräg oben hinten. In dieser Ansicht, wie auch in der Ansicht der Fig. 14, ist eine hakenförmige Ausbildung 38 an der Rückwand des Aufbewahrungskastens 100 zu erkennen, mit der der Aufbewahrungskasten 100 auf einen passenden Vorsprung, beispielsweise eine Halteschiene, gehängt werden kann.

Ebenfalls zu erkennen sind die Ausnehmungen 30, 130 in der in Fig. 18 dem Betrachter zugewandten Sockelwand 22.

## Patentansprüche

1. Regal (50) mit wenigstens einem Aufbewahrungskasten (10) für Kleinteile, insbesondere Schrauben, mit einem Boden (12) und wenigstens zwei Seitenwänden (14, 16), die vom Boden (12) ausgehen und oberhalb des Bodens (12) in Längsrichtung angeordnet sind, wobei eine erste und eine zweite Seitenwand (14, 16) in Querrichtung des Aufbewahrungskastens (10) einander gegenüber angeordnet sind und wobei parallel zu der ersten und zweiten Seitenwand (14, 16) in Längsrichtung des Aufbewahrungskastens (10) gesehen der Boden (12) eine Mitte sowie eine vordere und eine hintere Hälfte aufweist, **dadurch gekennzeichnet, dass** der Boden (12) und/oder sich in Verlängerung der ersten beziehungsweise der zweiten Seitenwand (14, 16) unterhalb des Bodens (12) erstreckende Sockelwände (22, 24) eine erste Nut und/oder Anschläge zum Ausbilden einer ersten nutartigen Aufnahme definieren, die senkrecht zu der ersten Seitenwand (14) und der zweiten Seitenwand (16) und im Bereich der Mitte oder der hinteren Hälfte des Bodens (12) verläuft und dass das Regal (50) Mittel zum Eingreifen in die erste Nut oder die erste nutartige Aufnahme des Aufbewahrungskastens (10) und wenigstens einen Anschlag für den Aufbewahrungskasten (10) oberhalb der Mittel zum Eingreifen aufweist, so dass der Aufbewahrungskasten (10) dann, wenn die Mittel zum Eingreifen in die erste Nut oder in die erste nutartige Aufnahme eingreifen und der Aufbewahrungskasten (10) an dem Anschlag anliegt, der Aufbewahrungskasten (10) eine erste teilweise aus dem Regal (50) ausgezogene gekippte und stabile Stellung einnimmt.

2. Regal (50)nach Anspruch 1, **dadurch gekennzeichnet, dass** die erste Seitenwand (14) eine sich in Verlängerung der ersten Seitenwand (14) unterhalb des Bodens (12) erstreckende erste Sockelwand (22) und die zweite Seitenwand (16) eine sich in Verlängerung der zweiten Seitenwand (16) unterhalb des Bodens (12) erstreckende zweite Sockelwand (24) aufweist, wobei die erste und die zweite Sockelwand (22, 24) jeweils mit einer Ausnehmung zum Definieren der ersten Nut versehen sind, wobei eine Wand der jeweiligen Ausnehmung, die der vorderen Hälfte des Bodens (12) zugewandt ist, schräg vom Boden (12) und der hinteren Hälfte des Bodens (12) weg verläuft.

3. Regal (50)nach Anspruch 1 oder 2, **dadurch gekennzeichnet, dass** der Boden (12) eine in Längsrichtung des Aufbewahrungskastens verlaufende zweite Nut (40) oder Anschläge zur Ausbildung einer in Längsrichtung des Aufbewahrungskastens (10) verlaufenden zweiten nutartigen Aufnahme aufweist.

4. Regal (50)nach einem der vorstehenden Ansprüche, **dadurch gekennzeichnet, dass** ein Deckel (72) für den Aufbewahrungskasten vorgesehen ist, wobei der Deckel (72) mit einer in Längsrichtung des Aufbewahrungskastens (10) verlaufenden dritten Nut (76) oder Anschlägen zur Ausbildung einer in Längsrichtung des Aufbewahrungskastens verlaufenden dritten nutartigen Aufnahme versehen ist.

5. Regal (50)nach wenigstens einem der vorstehenden Ansprüche, **dadurch gekennzeichnet, dass** ein Deckel (72) für den Aufbewahrungskasten (10) vorgesehen ist, wobei der Deckel (72) im geschlossenen Zustand unterhalb einer durch die Oberkanten der Seitenwände definierten gedachten Ebene angeordnet ist und wobei der Deckel (72) wenigstens einen sich in Richtung auf die gedachte Ebene erstreckenden Griffvorsprung aufweist.

6. Regal (50)nach Anspruch 5, **dadurch gekennzeichnet, dass** der Griffvorsprung des Deckels (72) eine sich in Längsrichtung erstreckende dritte Nut (76) aufweist, die zusammen mit der zweiten Nut (40) am Boden (12) eine Anlagefläche für ein den Aufbewahrungskasten umschlingendes Halteband (47) bildet.

7. Regal (50)nach wenigstens einem der vorstehenden Ansprüche, **dadurch gekennzeichnet, dass** der Boden (12) und/oder sich in Verlängerung der ersten bzw. der zweiten Seitenwand (14, 16) unterhalb des Bodens (12) erstreckende Sockelwände (22, 24) eine vierte Nut und/oder Anschläge zum Ausbilden einer vierten nutartige Aufnahme definieren, die senkrecht zu der ersten Seitenwand (14) und der zweiten Seitenwand (16) verläuft, im Bereich der Mitte oder der hinteren Hälfte des Bodens (12) verläuft und von der ersten Nut und/oder ersten nutartigen Aufnahme beabstandet ist.

8. Regal (50) nach wenigstens einem der vorstehenden Ansprüche, **dadurch gekennzeichnet, dass** die Mittel zum Eingreifen in die erste Nut oder die erste nutartige Aufnahme auch zum Eingreifen in eine vierte Nut oder vierte nutartige Aufnahme geeignet sind, wobei der Boden (12) und/oder sich in Verlängerung der ersten bzw. der zweiten Seitenwand (14, 16) unterhalb des Bodens (12) erstreckende Sockelwände (22, 24) die vierte Nut und/oder Anschläge zum Ausbilden der vierten nutartigen Aufnahme definieren, so dass der Aufbewahrungskasten dann, wenn die Mittel zum Eingreifen in die vierte Nut oder in die vierte nutartige Aufnahme eingreifen und der Aufbewahrungskasten an dem Anschlag anliegt, der Aufbewahrungskasten eine zweite, teilweise aus dem Regal (50) ausgezogene, gekippte und stabile Stellung einnimmt.

9. Regal (50) nach wenigstens einem der vorstehenden Ansprüche, **dadurch gekennzeichnet, dass** die Mittel zum Eingreifen und der wenigstens eine Anschlag oberhalb der Mittel zum Eingreifen so ausgebildet und angeordnet sind, dass die erste Nut oder die erste nutartige Aufnahme oder die vierte Nut oder die vierte nutartige Aufnahme am Aufbewahrungskasten (10) mittels Anheben des Aufbewahrungskastens (10) wenigstens in seinem vorderen Bereich außer Eingriff mit den Mitteln zum Eingreifen gebracht werden kann.

10. Regal (50) nach wenigstens einem der vorstehenden Ansprüche, **dadurch gekennzeichnet, dass** das Regal wenigstens einen Fachboden (54) aufweist und die Mittel zum Eingreifen an der Vorderkante des Fachbodens (54) wenigstens einen vom Fachboden (54) aus nach oben abragenden Vorsprung (60) oder wenigstens eine sich nach unten erstreckende Ausnehmung im Fachboden aufweisen.

11. Regal (50) nach Anspruch 10, **dadurch gekennzeichnet, dass** der nach oben abragende Vorsprung (60) sich über die gesamte Breite des Fachbodens (54) erstreckt.

12. Regal (50) nach wenigstens einem der vorstehenden Ansprüche, **dadurch gekennzeichnet, dass** der Anschlag als eine Querstrebe (64) oberhalb des Fachbodens (54) ausgebildet ist.

13. Regal (50) nach Anspruch 12, **dadurch gekennzeichnet, dass** die Querstrebe (64) an der Unterseite eines Fachbodens (52) angeordnet ist oder durch die Unterseite eines Fachbodens gebildet ist.

14. Regal (50) nach wenigstens einem der vorstehenden Ansprüche, **dadurch gekennzeichnet, dass** der Fachboden (52, 54) mit einem in Auszugsrichtung des Aufbewahrungskastens (10) verlaufenden Längsvorsprung (62) versehen ist und der Aufbewahrungskasten (10) mit einer zu dem Längsvorsprung (62) passenden und in Längsrichtung verlaufenden zweiten Nut (40) oder einer zweiten nutartigen Aufnahme an der Unterseite des Bodens (12) versehen ist.

## Claims

1. Rack (50) with at least one storage box (10) for small items, in particular screws, the storage box having a base (12) and at least two side walls (14, 16), which extend from the base (12) and are arranged in the longitudinal direction above the base (12), wherein a first side wall and a second side wall (14, 16) are arranged opposite to one another, as seen in the transverse direction of the storage box (10), and wherein parallel to the first and second side walls (14, 16), as seen in the longitudinal direction of the storage box (10), the base (12) has a centre and also a front half and a rear half, **characterized in that** the base (12) and/or pedestal walls (22, 24), which run beneath the base (12) in extension of the first side wall and the second side wall (14, 16), respectively, define(s) a first groove and/or stops for forming a first groove-like mount, which runs perpendicularly in relation to the first side wall (14) and the second side wall (16) and in the region of the centre or of the rear half of the base (12), and **in that** the rack (50) has means for engaging in the first groove or the first groove-like mount of the storage box (10) and also has at least one stop for the storage box (10) above the engaging means, so that, when the engaging means engage in the first groove or in the first groove-like mount and the storage box (10) butts against the stop, the storage box (10) assumes a first tilted and stable position, in which it has been pulled some way out of the rack (50) .

2. Rack (50) according to Claim 1, **characterized in that** the first side wall (14) has a first pedestal wall (22), which runs beneath the base (12) in extension of the first side wall (14), and the second side wall (16) has a second pedestal wall (24), which runs beneath the base (12) in extension of the second side wall (16), wherein the first and the second pedestal walls (22, 24) are each provided with an aperture for defining the first groove, wherein a wall of the respective aperture, which is directed towards the front half of the base (12), runs obliquely away from the base (12) and the rear half of the base (12).

3. Rack (50) according to Claim 1 or 2, **characterized in that** the base (12) has a second groove (40), which runs in the longitudinal direction of the storage box, or stops for forming a second groove-like mount, which runs in the longitudinal direction of the storage box (10).

4. Rack (50) according to one of the preceding claims, **characterized in that** there is a lid (72) provided for the storage box, wherein the lid (72) is provided with a third groove (76), which runs in the longitudinal direction of the storage box (10), or stops for forming a third groove-like mount, which runs in the longitudinal direction of the storage box.

5. Rack (50) according to at least one of the preceding claims, **characterized in that** there is a lid (72) provided for the storage box (10), wherein, in the closed state, the lid (72) is arranged beneath an imaginary plane defined by the upper edges of the side walls, and wherein the lid (72) has at least one handle protrusion extending in the direction of the imaginary plane.

6. Rack (50) according to Claim 5, **characterized in that** the handle protrusion of the lid (72) has a third groove (76), which extends in the longitudinal direction and, together with the second groove (40) on the base (12), forms a stop surface for a retaining strap (47), which wraps around the storage box.

7. Rack (50) according to at least one of the preceding claims, **characterized in that** the base (12) and/or pedestal walls (22, 24), which run beneath the base (12) in extension of the first side wall and the second side wall (14, 16), respectively, define(s) a fourth groove and/or stops for forming a fourth groove-like mount, which runs perpendicularly in relation to the first side wall (14) and the second side wall (16), runs in the region of the centre or of the rear half of the base (12) and is spaced apart from the first groove and/or first groove-like mount.

8. Rack (50) according to at least one of the preceding claims, **characterized in that** the means for engaging in the first groove or the first groove-like mount are also suitable for engaging in a fourth groove or fourth groove-like mount, wherein the base (12) and/or pedestal walls (22, 24), which run beneath the base (12) in extension of the first side wall and the second side wall (14, 16), respectively, define(s) the fourth groove and/or stops for forming the fourth groove-like mount, so that, when the engaging means engage in the fourth groove or in the fourth groove-like mount and the storage box butts against the stop, the storage box assumes a second tilted and stable position, in which it has been pulled some way out of the rack (50).

9. Rack (50) according to at least one of the preceding claims, **characterized in that** the engaging means and the at least one stop above the engaging means are designed, and arranged, such that the first groove or the first groove-like mount or the fourth groove or the fourth groove-like mount on the storage box (10) can be disengaged from the engaging means by way of the storage box (10) being raised at least in its front region.

10. Rack (50) according to at least one of the preceding claims, **characterized in that** the rack has at least one shelf (54) and the engaging means have, on the front edge of the shelf (54), at least one protrusion (60), which projects upwards from the shelf (54), or at least one downwardly extending aperture in the shelf.

11. Rack (50) according to Claim 10, **characterized in that** the upwardly projecting protrusion (60) extends over the entire width of the shelf (54).

12. Rack (50) according to at least one of the preceding claims, **characterized in that** the stop is designed in the form of a transverse strut (64) above the shelf (54).

13. Rack (50) according to Claim 12, **characterized in that** the transverse strut (64) is arranged on the underside of a shelf (52) or is formed by the underside of a shelf.

14. Rack (50) according to at least one of the preceding claims, **characterized in that** the shelf (52, 54) is provided with a longitudinal protrusion (62), which runs in the pulling-out direction of the storage box (10), and the storage box (10) is provided with a second, longitudinally running groove (40), which matches the longitudinal protrusion (62), or with a second groove-like mount on the underside of the base (12).

## Revendications

1. Rayonnage (50) comportant au moins une boîte de rangement (10) pour des petites pièces, en particulier des vis, comportant un fond (12) et au moins deux parois latérales (14, 16) qui partent du fond (12) et sont disposées au-dessus du fond (12) dans la direction longitudinale, une première et une deuxième paroi latérale (14, 16) étant disposées en regard l'une de l'autre dans la direction transversale de la boîte de rangement (10) et, parallèlement à la première et la deuxième paroi latérale (14, 16), vu dans la direction longitudinale de la boîte de rangement (10), le fond (12) présentant un centre ainsi qu'une moitié avant et une moitié arrière, **caractérisé en ce que** le fond (12) et/ou des parois de base (22, 24) s'étendant dans le prolongement de la première ou de la deuxième paroi latérale (14, 16) en dessous du fond (12) définissent une première rainure et/ou des butées pour la formation d'un premier logement de type rainure, qui s'étend perpendiculairement à la première paroi latérale (14) et à la deuxième paroi latérale (16) et dans la région du centre ou de la moitié arrière du fond (12) et **en ce que** le rayonnage (50) présente des moyens d'entrée en prise dans la première rainure ou le premier logement de type rainure de la boîte de rangement (10) et au moins une butée pour la boîte de rangement (10) au-dessus des moyens d'entrée en prise, de sorte que la boîte de rangement (10), lorsque les moyens d'entrée en prise viennent en prise dans la première rainure ou dans le premier logement de type rainure et que la boîte de rangement (10) s'appuie contre la butée, la boîte de rangement (10) adopte une première position basculée et stable partiellement sortie du rayonnage (50).

2. Rayonnage (50) selon la revendication 1, **caractérisé en ce que** la première paroi latérale (14) présente une première paroi de base (22) s'étendant dans le prolongement de la première paroi latérale (14) en dessous du fond (12) et la deuxième paroi latérale (16) présente une deuxième paroi de base (24) s'étendant dans le prolongement de la deuxième paroi latérale (16) en dessous du fond (12), la première et la deuxième paroi de base (22, 24) étant pourvues respectivement d'un évidement servant à définir la première rainure, une paroi de l'évidement respectif, qui est tournée vers la moitié avant du fond (12), s'étendant de manière oblique à l'écart du fond (12) et de la moitié arrière du fond (12) .

3. Rayonnage (50) selon la revendication 1 ou 2, **caractérisé en ce que** le fond (12) présente une deuxième rainure (40) s'étendant dans la direction longitudinale de la boîte de rangement ou des butées pour la formation d'un deuxième logement de type rainure s'étendant dans la direction longitudinale de la boîte rangement (10).

4. Rayonnage (50) selon l'une des revendications précédentes, **caractérisé en ce qu'**un couvercle (72) pour la boîte de rangement est prévu, le couvercle (72) étant pourvu d'une troisième rainure (76) s'étendant dans la direction longitudinale de la boîte de rangement (10) ou de butées pour la formation d'un troisième logement de type rainure s'étendant dans la direction longitudinale de la boîte rangement.

5. Rayonnage (50) selon au moins l'une des revendications précédentes, **caractérisé en ce qu'**un couvercle (72) pour la boîte rangement (10) est prévu, le couvercle (72) étant, dans l'état fermé, disposé en dessous d'un plan imaginaire défini par les bords supérieurs des parois latérales et le couvercle (72) présentant au moins une saillie de préhension s'étendant en direction du plan imaginaire.

6. Rayonnage (50) selon la revendication 5, **caractérisé en ce que** la saillie de préhension du couvercle (72) présente une troisième rainure (76) s'étendant dans la direction longitudinale, laquelle troisième rainure, conjointement avec la deuxième rainure (40), forme sur le fond (12) une surface d'appui pour une bande de retenue (47) enlaçant la boîte de rangement.

7. Rayonnage (50) selon au moins l'une des revendications précédentes, **caractérisé en ce que** le fond (12) et/ou des parois de base (22, 24) s'étendant dans le prolongement de la première ou de la deuxième paroi latérale (14, 16) en dessous du fond (12) définissent une quatrième rainure et/ou des butées pour la formation d'un quatrième logement de type rainure qui s'étend perpendiculairement à la première paroi latérale (14) et à la deuxième paroi latérale (16), s'étend dans la région du centre ou de la moitié arrière du fond (12) et est espacé de la première rainure et/ou du premier logement de type rainure.

8. Rayonnage (50) selon au moins l'une des revendications précédentes, **caractérisé en ce que** les moyens d'entrée en prise dans la première rainure ou le premier logement de type rainure sont également appropriés à l'entrée en prise dans une quatrième rainure ou un quatrième logement de type rainure, le fond (12) et/ou des parois de base (22, 24) s'étendant dans le prolongement de la première ou de la deuxième paroi latérale (14, 16) en dessous du fond (12) définissant la quatrième rainure et/ou des butées pour la formation du quatrième logement de type rainure, de sorte que la boîte de rangement, lorsque les moyens d'entrée en prise viennent en prise dans la quatrième rainure ou dans le quatrième logement de type rainure et que la boîte de rangement s'appuie contre la butée, la boîte de rangement adopte une deuxième position basculée et stable partiellement sortie du rayonnage (50).

9. Rayonnage (50) selon au moins l'une des revendications précédentes, **caractérisé en ce que** les moyens d'entrée en prise et l'au moins une butée au-dessus des moyens d'entrée en prise sont réalisés et disposés de telle sorte que la première rainure ou le premier logement de type rainure ou la quatrième rainure ou le quatrième logement de type rainure peuvent être amenés hors de prise avec les moyens d'entrée en prise par soulèvement de la boîte de rangement (10) au moins dans sa région avant.

10. Rayonnage (50) selon au moins l'une des revendications précédentes, **caractérisé en ce que** le rayonnage présente au moins un fond de compartiment (54) et les moyens d'entrée en prise présentent, au niveau du bord avant du fond de compartiment (54), au moins une saillie (60) faisant saillie vers le haut à partir du fond de compartiment (54) ou au moins un évidement s'étendant vers le bas dans le fond de compartiment.

11. Rayonnage (50) selon la revendication 10, **caractérisé en ce que** la saillie (60) faisant saillie vers le haut s'étend sur toute la largeur du fond de compartiment (54).

12. Rayonnage (50) selon au moins l'une des revendications précédentes, **caractérisé en ce que** la butée est réalisée sous la forme d'une entretoise transversale (64) au-dessus du fond de compartiment (54).

13. Rayonnage (50) selon la revendication 12, **caractérisé en ce que** l'entretoise transversale (64) est disposée sur le côté inférieur d'un fond de compartiment (52) ou est formée par le côté inférieur d'un fond de compartiment.

14. Rayonnage (50) selon au moins l'une des revendications précédentes, **caractérisé en ce que** le fond de compartiment (52, 54) est pourvu d'une saillie longitudinale (62) s'étendant dans la direction de sortie de la boîte de rangement (10) et la boîte de rangement (10) est pourvue d'une deuxième rainure (40) adaptée à la saillie longitudinale (62) et s'étendant dans la direction longitudinale ou d'un deuxième logement de type rainure sur le côté inférieur du fond (12).
